# EUROPÄISCHE PATENTSCHRIFT

(11) **EP 3 242 826 B1**
(45) Veröffentlichungstag und Bekanntmachung des Hinweises auf die Patenterteilung: **28.08.2019**
(21) Anmeldenummer: 15771896.6
(22) Anmeldetag: 22.09.2015
(51) Int. Cl.: B62D 1/16, B62D 1/184

(54) **FERTIGUNGSVERFAHREN FÜR EINE MODULARE LENKSÄULE MIT STRANGPRESSPROFILEN**
PRODUCTION METHOD FOR A MODULAR STEERING COLUMN HAVING EXTRUDED PROFILED ELEMENTS
PROCÉDÉ DE FABRICATION D'UNE COLONNE DE DIRECTION MODULAIRE MUNIE DE PROFILÉS EXTRUDÉS

(30) Priorität: 08.01.2015 DE 102015000028
(43) Veröffentlichungstag der Anmeldung: 15.11.2017
(73) Patentinhaber: ThyssenKrupp Presta AG, 9492 Eschen (LI); thyssenkrupp AG, 45143 Essen (DE)
(72) Erfinder: GSTÖHL, Eric, 9493 Mauren (LI); HAUSKNECHT, Sven, A-6850 Dornbirn (AT); PASCH, Frank, CH-9472 Grabs (CH); LOOS, Stefan-Hermann, CH-9426 Lutzenberg (CH); GEISSLER, Christian, 9470 Buchs (CH)
(74) Vertreter: thyssenkrupp Intellectual Property GmbH
(86) Internationale Anmeldenummer: PCT/EP2015/071742
(87) Internationale Veröffentlichungsnummer: WO 2016/110335

(56) Entgegenhaltungen:
- WO-A1-2006/118054
- WO-A1-2008/086548
- DE-B3-102011 054 598
- FR-A1- 3 004 154
- KR-A- 20080 071 323

## Beschreibung

Die vorliegende Erfindung betrifft ein Verfahren zur Fertigung einer Lenksäule mit den Merkmalen des Oberbegriffs des Anspruchs 1.

Lenksäulen haben in Kraftfahrzeugen vielfältige Funktionen. Zum einen dienen sie zur Befestigung des Lenkrades und zur Lagerung der Lenkwelle oder Lenkspindel an der Karosserie. Sie dienen auch zur Befestigung von Anbauteilen wie z. B. einer Diebstahlsicherung oder von Bedienelementen. Teilweise sind die Lenksäulen auch mechanisch oder elektrisch in Axialrichtung und Vertikalrichtung verstellbar, um die Position des Lenkrades an die Anforderungen des Fahrers anpassen zu können. Schließlich sollen Lenksäulen auch bei einem Aufprall des Fahrzeugs auf ein Hindernis kontrolliert nachgeben, um Aufprallenergie des Fahrers auf das Lenkrad zu absorbieren und dadurch das Verletzungsrisiko für den Fahrer zu vermindern. Bei all diesen Anforderungen wird außerdem gefordert, dass Lenksäulen einen kleinen Bauraum beanspruchen, ein geringes Gewicht aufweisen und spiel- und geräuschfrei arbeiten.

Eine Möglichkeit, Lenksäulen preiswert und leicht zu gestalten, besteht in der Verwendung von Strangpressprofilen. Strangpressprofile haben gegenüber Druckgusskomponenten den Vorteil geringer Produktionskosten.

Aus dem Stand der Technik sind deshalb bereits Lenksäulen bekannt, in denen Strangpressprofile eingesetzt werden. Das Dokument US 8,863,609 B2 offenbart beispielsweise eine Lenksäule, bei der die Manteleinheit, genauer gesagt das äußere Mantelrohr, aus einem Strangpressprofil gefertigt ist. Diese Lenksäule weist die Besonderheit auf, dass die Spannachse für das Lösen und Blockieren der Verstellung einseitig an dem äußeren Mantelrohr angreift und nicht zu der anderen Seite des Mantelrohres durchgehend ist.

Das Dokument FR 3004154 zeigt eine Manteleinheit für eine Lenksäule, wobei die Manteleinheit aus einem Strangpressprofil hergestellt ist. Die verschiedenen erforderlichen Funktionsabschnitte sind beispielsweise Befestigungsbereiche, Führungen für die Verstellfunktion, Lagersitze und Ansatzpunkte für zusätzliche Komponenten. Die WO 2008/086548 A1 offenbart die Präambel der unabhängigen Ansprüche 1 und 13.

Es ist deshalb Aufgabe der vorliegenden Erfindung, ein Verfahren zur Herstellung einer Lenksäule für ein Kraftfahrzeug zu schaffen, das unter Verwendung von einem Strangpressprofil mit geringerem Bearbeitungsaufwand ausgeführt werden kann. Diese Aufgabe wird von einem Verfahren mit den Merkmalen des Anspruchs 1 gelöst. Vorteilhafte Weiterbildungen ergeben sich aus den Unteransprüchen. Weiterhin wird die Aufgabe durch eine Lenksäule mit den Merkmalen des Anspruchs 14 gelöst.

Das Verfahren zur Herstellung einer Lenksäule für ein Kraftfahrzeug, wobei die Lenksäule ein inneres Mantelrohr, zur drehbaren Aufnahme einer Lenkwelle um ihre Längsachse, und ein äußeres Mantelrohr, das das innere Mantelrohr aufnimmt, umfasst, wobei das äußere Mantelrohr einen sich in Richtung der Längsachse erstreckenden Längsschlitz aufweist, wobei ein Spannapparat, der zwischen einer Freigabestellung, in der das innere Mantelrohr gegenüber dem äußeren Mantelrohr verstellbar ist, und einer Fixierstellung, in der das innere Mantelrohr gegenüber dem äußeren Mantelrohr fixiert ist, umschaltbar ist, wobei der Spannapparat einen Spannachse umfasst, die durch eine Ausnehmung im äußeren Mantelrohr quer zur Längsachse geführt ist und wobei der Längsschlitz in der Freigabestellung eine größere Breite aufweist als in der Fixierstellung,
gekennzeichnet durch folgende Verfahrensschritte:
a) Anfertigen eines einzelnen Rohlings des äußeren Mantelrohres in einem Strangpressverfahren, welcher den in Längsrichtung durchgehenden Längsschlitz aufweist,
b) Ablängen des einzelnen Rohlings auf eine erforderliche Bauteillänge,
c) Erzeugen von einer vordefinierten Anzahl von Ausnehmungen in einem vordefinierten Abstand von einer Stirnseite des Rohlings, mittels einer Zerspanungsoperation zur Ausbildung von Funktionselementen im äußeren Mantelrohr,
g) Komplettieren der Lenksäule durch Anbringen von weiteren Bauelementen.

Auf diese Weise ist es möglich, allein durch Auswahl der Länge des äußeren Mantelrohres und durch Fertigbearbeitung mittels einer Zerspanungsoperation in einer einzigen Aufspannung verschiedene Bauteillängen des äußeren Mantelrohrs für verschiedene Lenksäulen herzustellen, die modular für verschiedene Einbausituationen geeignet sind. Trotz der Zerspanungsoperation bleibt das Profil des Rohlings, welcher den in Längsrichtung durchgehenden Längsschlitz aufweist, im Wesentlichen über seine Länge erhalten, wobei im Wesentlichen die Profilstruktur erhalten bleibt. Lange und kurze Lenksäulen unterscheiden sich nur durch den Verfahrensschritt b), indem das Ablängen an unterschiedlichen Positionen erfolgt. Zur Komplettierung können Gleichteile verwendet werden.

Unter Zerspanungsoperationen sind mechanische Trennverfahren mit geometrisch bestimmter und geometrisch unbestimmter Schneide zu verstehen, beispielsweise Bohren, Fräsen, Schleifen und Drehen. Das Ablängen kann auf verschiedene Arten erfolgen, beispielsweise Sägen, Laserschneiden oder Wasserstrahlschneiden.

Vorteilhaft ist es, wenn das äußere Mantelrohr die Lenkwelle einteilig um mehr als 270° umschließt. Auf diese Weise kann eine optimale Abstützung der Lenkwelle im äußeren Mantelrohr erreicht werden. Bevorzugt umschließt das äußere Mantelrohr die Lenkwelle um mehr als 300°, wodurch die Lenksäule eine weitere Verbesserung der Abstützung erfährt und somit eine hohe Steifigkeit der Abstützung gewährleistet werden kann.

In vorteilhafter Weise werden in den Strangpressrohling zur Ausbildung des äußeren Mantelrohrs ausschließlich Ausnehmungen, bevorzugt in Form von Öffnungen, und eventuell zusätzlich Planflächen mittels Zerspanung eingebracht.

Unter Ausnehmungen sind Senkungen bzw. Vertiefungen oder Durchbrüche zu verstehen. Durchbrüche sind beispielsweise Langlöcher oder kreiszylindrische Bohrungen bzw. Gewindebohrungen. Bevorzugt sind am Strangpressprofil zur Ausbildung des äußeren Mantelrohrs ausschließlich Bohrungen oder Langlöcher, sowie Planflächen durch Nachbearbeitung eingebracht. Die Ausnehmung dienen bevorzugt als Funktionselemente, beispielsweise zur Ausbildung von Verstelllanglöchern und/oder Bohrungen zum Hindurchführen der Spannachse oder zur Aufnahme weiterer Bauelemente. Planflächen können vor allem in den Bereichen des äußeren Mantels vorgesehen sein, die als Kontaktflächen zur Paarung mit anderen Bauelementen vorgesehen sind. Durch diese Planflächen wird eine gute Paarung begünstigt.

Bevorzugt umfasst das Verfahren weitere Verfahrensschritte vor dem Verfahrensschritt g):
d) Anfertigen eines einzelnen Rohlings des inneren Mantelrohres, welcher den in Längsrichtung durchgehenden Längsschlitz aufweist, in einem Strangpressverfahren,
e) Ablängen des einzelnen Rohlings auf eine erforderliche Bauteillänge,
f) Erzeugen von einer vordefinierten Anzahl von Ausnehmungen in einem vordefinierten Abstand von einer Stirnseite des Rohlings, mittels einer Zerspanungsoperation zur Ausbildung von Funktionselementen im inneren Mantelrohr.

Auf diese Weise ist es möglich, allein durch Auswahl der Länge des inneren Mantelrohres und durch Fertigbearbeitung mittels einer Zerspanungsoperation in einer einzigen Aufspannung für verschiedene Bauteillängen des inneren Mantelrohres für verschiedene Lenksäulen herzustellen, die modular für verschiedene Einbausituationen geeignet sind. Trotz der Zerspanungsoperation bleibt das Profil des Rohlings mit dem in Längsrichtung durchgehenden Längsschlitz im Wesentlichen über seine Länge erhalten, wobei im Wesentlichen die Profilstruktur erhalten bleibt. Lange und kurze Lenksäulen unterscheiden sich nur durch den Verfahrensschritt e), indem das Ablängen an unterschiedlichen Positionen erfolgt.

Vorteilhaft ist es, wenn in jedem Längenbereich des äußeren und/oder inneren Mantelrohrs die Querschnittsfläche des Rohlings zur Ausbildung des äußeren und/oder Mantelrohrs mittels der Zerspanungsoperation maximal um 30% reduziert wird. Unter der Querschnittfläche ist dabei stets die Profilquerschnittsfläche zu verstehen, wobei diese orthogonal zur Längsachse ausgerichtet ist. Unter in jedem Längenbereich des äußeren und/oder inneren Mantelrohrs ist zu verstehen, dass die Querschnittsflächen an jedem beliebigen Längenabschnitt durch die Zerspanungsoperation maximal um 30% gegenüber der unbearbeiteten Querschnittsfläche des Rohlings reduziert sind. Auf diese Weise lässt sich eine kostengünstige Herstellung des äußeren und/oder inneren Mantelrohrs gewährleisten. Bevorzugt wird in jedem Längenbereich des äußeren und/oder inneren Mantelrohrs die Querschnittsfläche des Rohlings zur Ausbildung des äußeren und/oder Mantelrohrs mittels der Zerspanungsoperation maximal um 20%, besonders bevorzugt 10% und ganz besonders bevorzugt um 5%, reduziert.

Vorteilhaft ist es, wenn das Komplettieren den Einbau der Lenkwelle umfasst. Bei der Lenkwelle handelt sich vorzugsweise um eine insbesondere zweiteilige und teleskopierbare Lenkwelle, wobei diese an einem Ende einen Kopplungsabschnitt zur Anbindung eines Lenkrades umfasst.

Vorteilhaft ist es, wenn das Komplettieren den Anbau einer Konsole umfasst.

Dabei kann der Anbau der Konsole die Montage des Spannapparates umfassen, der die Spannachse enthält, welche Funktionselemente des äußeren und/und oder inneren Mantelrohrs, beispielsweise in Form von Bohrungen und Führungsschlitzen, durchsetzt. Die Konsole umfasst dabei zumindest eine Seitenwange, wobei diese Seitenwange bevorzugt mit einer zumindest teilweise geplanten Fläche des äußeren Mantels in Kontakt bringbar ist. Insbesondere kann ein Tragelement auf eine lineare Nuten- oder Rippenstruktur auf das äußere Mantelrohr aufgesetzt werden, wobei das Tragelement zur Befestigung an der Karosserie des Fahrzeugs dient und an dem Mantelrohr einfach zu positionieren und zu befestigen ist. Je nach Positionierung ist der Befestigungspunkt wählbar, ohne dass das Mantelrohr dafür bearbeitet werden muss.

Das Tragelement kann dabei vorteilhaft mit einer Buchse versehen werden, die als Befestigungselement an der Karosserie oder der Konsole dient und die außerdem Lagerachse für eine Schwenkbewegung bei einer Höhenverstellung der Lenksäule aufnimmt.

Vorzugsweise ist die Lenkwelle teleskopierbar und wird mittels Wälzlagern in das innere und/oder äußere Mantelrohr eingesetzt und dort drehbar gelagert.

Es ist weiter von Vorteil, wenn wenigstens ein Wälzlager mittels eines Passstückes in das äußere Mantelrohr eingesetzt wird. Der Lagersitz kann dann in einfacher Weise in dem Passstück ausgebildet sein.

Zuverlässig gehalten und dauerhaft geräuscharm wird die Lagerung, wenn das Passstück unverdrehbar in dem äußeren Mantelrohr angeordnet wird.

Vorteilhaft ist auch eine nach dem beschriebenen Verfahren hergestellte verstellbare Lenksäule, weil durch die einfache modulare Bauweise und die einfache Fertigung unterschiedlicher Lenksäulen unter Verwendung von Gleichteilen für verschiedene Typen Kostenvorteile ergeben.

Weiterhin wird eine Lenksäule für ein Kraftfahrzeug vorgeschlagen, wobei die Lenksäule ein inneres Mantelrohr zur drehbaren Aufnahme einer Lenkwelle um ihre Längsachse, und ein äußeres Mantelrohr, das das innere Mantelrohr aufnimmt, umfasst, wobei das äußere Mantelrohr einen sich in Richtung der Längsachse erstreckenden Längsschlitz aufweist, wobei ein Spannapparat, der zwischen einer Freigabestellung, in der das innere Mantelrohr gegenüber dem äußeren Mantelrohr verstellbar ist, und einer Fixierstellung, in der das innere Mantelrohr gegenüber dem äußeren Mantelrohr fixiert ist, umschaltbar ist, wobei der Spannapparat einen Spannbolzen umfasst, der durch eine Ausnehmung im äußeren Mantelrohr quer zur Längsachse geführt ist und wobei der Längsschlitz in der Freigabestellung eine größere Breite aufweist als in der Fixierstellung. Erfindungsgemäß ist das äußere Mantelrohr in einem Strangpressverfahren hergestellt, das auf eine erforderliche Bauteillänge abgelängt wurde, und eine vordefinierte Anzahl von Ausnehmungen aufweist, die in einem vordefinierten Abstand von einer Stirnseite des Rohlings, welcher den in Längsrichtung durchgehenden Längsschlitz aufweist, angeordnet sind, wobei das äußere Mantelrohr das innere Mantelrohr einstückig um mindestens 270° umschließt. Mit Vorteil umschließt das äußere Mantelrohr das innere Mantelrohr um mehr als 300°.

Diese Lenksäule bietet den Vorteil einer kostengünstigen Herstellung und die Möglichkeit mit sehr ähnlichen Bauteilen, die sich nur durch wenige Bearbeitungsschritte voneinander unterscheiden, verschiedene Lenksäulen für verschiedene Fahrzeuge darzustellen.

Nachfolgend wird ein Ausführungsbeispiel der vorliegenden Erfindung anhand der Zeichnung beschrieben. Es zeigen:
- Figur 1:: eine erfindungsgemäße Lenksäule in einer perspektivischen Darstellung;
- Figur 2:: die Lenksäule aus Figur 2 in einem Längsschnitt von der Seite;
- Figur 3:: die Lenksäule aus Figur 2 in einer anderen Verstellposition;
- Figur 4:: die Lenksäule aus Figur 2 und Figur 3 in zusammengeschobener Stellung nach einem Aufprall;
- Figur 5:: die Lenksäule aus Figur 1 in einer perspektivischen Ansicht von der dem Lenkrad abgewandten Seite her;
- Figur 6:: einen Querschnitt durch die Lenksäule im Bereich einer Spannachse;
- Figur 7:: einen perspektivischen Ausschnitt einer Lenksäulenanordnung mit separiertem innerem Mantelrohr;
- Figur 8:: einen anderen Querschnitt mit aufgesetztem Tragelement;
- Figur 9:: eine perspektivische Ansicht des äußeren Mantelrohrs mit separiertem Tragelement;
- Figur 10:: den Tragschlitten mit weiteren Komponenten in einer Explosionsdarstellung;
- Figur 11:: eine Darstellung entsprechend Figur 9 mit veranschaulichter Schwenkachse;
- Figur 12:: eine schematische Darstellung der Fertigung des äußeren Mantelrohres im Strangpressverfahren mit angedeuteten Trennstellen für die Auftrennung des Strangpressprofils in einzelne Rohlinge für äußere Mantelrohre;
- Figur 13:: äußere Mantelrohre in verschiedener Länge mit Veranschaulichung der einheitlichen Lage eines Funktionsbereichs; sowie
- Figur 14:: eine Seitenansicht ähnlich Figur 13 mit der Darstellung von zwei inneren Mantelrohren, bei denen ebenfalls die Lage eines Funktionsbereichs dargestellt ist.

Gleiche oder vergleichbare Bauelemente in verschiedenen Ausführungsbeispielen tragen dieselben Bezugsziffern.

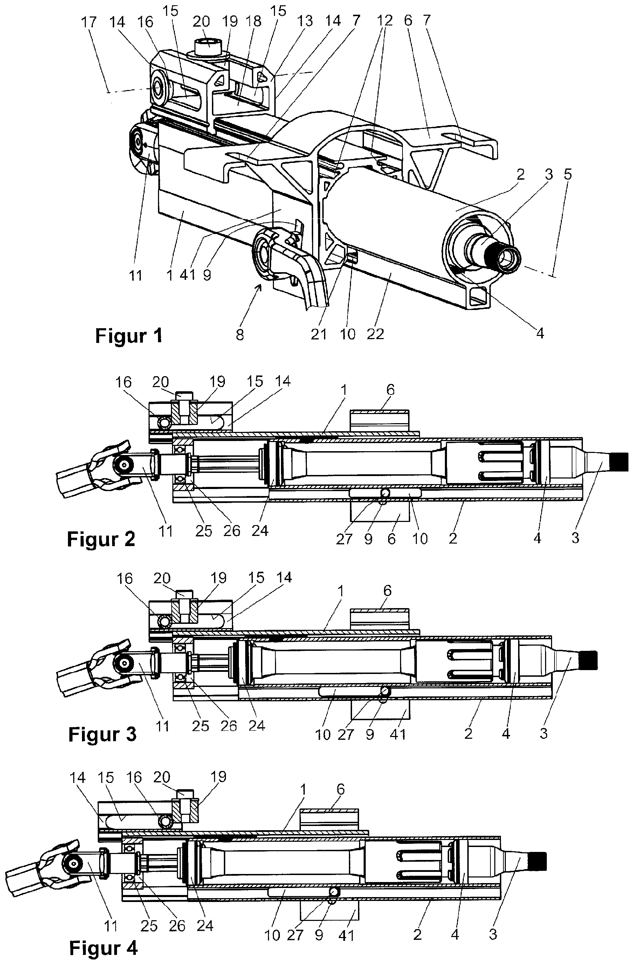

In der Figur 1 ist in perspektivischer Ansicht eine Lenksäule mit einem äußeren Mantelrohr 1 und einem inneren Mantelrohr 2 dargestellt. Das innere Mantelrohr trägt in seinem Inneren eine obere Lenkspindel 3, die in einem Wälzlager 4 um eine Längsachse 5 drehbar gelagert ist. Die Längsachse 5 definiert eine Axialrichtung der Lenksäulenanordnung, in der das innere Mantelrohr 2 gegenüber dem äußeren Mantelrohr 1 teleskopähnlich verschieblich ist.

Das äußere Mantelrohr 1 ist in einer Konsole 6 gehalten, die mit Ausschnitten 7 zur Befestigung der Konsole 6 an einer Fahrzeugkarosserie versehen ist. Die Konsole 6 weist weiter einen Spannapparat 8 auf, der die Konsole 6 quer zu der Längsachse 5 durchsetzt und der eine Höhenverstellung des äußeren Mantelrohrs 1 gegenüber der Konsole 6 und eine Axialverstellung des inneren Mantelrohrs 2 gegenüber dem äußeren Mantelrohr 1 erlaubt. Zu diesem Zweck ist die Konsole 6 mit Führungsschlitzen 9 versehen und das innere Mantelrohr 2 ist mit einem Führungsschlitz 10 versehen.

Das äußere Mantelrohr 1 trägt weiter eine untere Lenkwelle oder Lenkspindel 11, die in einem hier nicht sichtbaren Wälzlager innerhalb des äußeren Mantelrohrs 1 gelagert ist. Die obere Lenkspindel 3 und die untere Lenkspindel 11 sind drehfest, aber teleskopierbar miteinander verbunden, wie dies im Stand der Technik üblich ist.

Das äußere Mantelrohr 1 weist an seiner Oberseite einander abgewandte Längsnuten 12 auf, in die ein Tragelement 13 eingreift. Das Tragelement 13 ist in den Nuten schlittenartig in Richtung der Längsachse 5 auf das äußere Mantelrohr 1 aufgesetzt und dort, im Beispiel durch Verstemmen, befestigt. Das Tragelement 13 greift dazu klammerartig in die Nuten 12 ein und umgreift den zwischen den Nuten 12 liegenden oberen äußeren Abschnitt des äußeren Mantelrohrs 1. Die Befestigung kann ebenfalls durch eine Übermaßpassung (= Presspassung) oder Kleben erfolgen. Das Tragelement 13 weist weiterhin Seitenwände 14 auf, die sich in montiertem Zustand gemäß Figur 1 von den Nuten 12 nach oben erstrecken und die mit ihren Flachseiten parallel zu der Längsachse 5 sowie mit ihren kurzen Stirnseiten quer zu der Längsachse 5 orientiert sind. Die Seiten 14 sind jeweils mit einer länglichen Ausnehmung 15 versehen, deren Längsachse parallel zu der Längsachse 5 orientiert ist. In den Ausnehmungen 15 quer zu der Längsachse 5 ist eine rohrförmige Buchse 16 angeordnet, die eine Schwenkachse 17 definiert. Die Schwenkachse 17 ist am Kraftfahrzeug befestigt und ist nach Montage der Lenksäulenanordnung in einem Kraftfahrzeug im Wesentlichen quer zu der Fahrtrichtung und horizontal ausgerichtet. Die Schwenkachse 17 dient als Lagerachse für die Vertikalverschwenkung, auch Höhenverstellung genannt, der Lenksäule im Betrieb.

Zwischen den Seiten 14 ist in dem Tragelement 13 eine T-Nut 18 vorgesehen, die sich parallel zu der Längsachse 5 erstreckt. Die T-Nut 18 trägt in ihrem inneren freien Querschnitt einen Nutenstein 19, der mit einer Gewindeschraube 20 in dem Führungselement befestigbar ist.

Das äußere Mantelrohr 1 weist an seiner Unterseite, die auch bei Einbau in ein Fahrzeug nach unten weist, einen Längsschlitz 21 auf, in dem ein nach unten weisender Steg 22, der in Längsrichtung der Längsachse 5 an der Unterseite des inneren Mantelrohres 2 beim Strangpressverfahren für das innere Mantelrohr 2 mit angeformt ist, axial geführt ist. Im Betrieb ist das innere Mantelrohr 2 in dem äußeren Mantelrohr 1 verschiebbar zum Zwecke der Axialverstellung der Lenksäule, solange der Spannapparat 8 gelöst ist und sich somit in einer Freigabestellung befindet. Bei gespanntem Spannapparat 8 wird das äußere Mantelrohr 1 und somit der Längsschlitzes 21 zusammengezogen und das innere Mantelrohr 2 geklemmt, um die gewählte Axialposition zu fixieren. Eine Breite B des Längsschlitzes 21 wird beim Spannen des Spannapparates 8 reduziert. Die Breite B entspricht der Ausdehnung des Längsschlitzes 21 in Richtung der Spannachse 27.

Das innere Mantelrohr 2 weist weiter einen kreisrunden inneren Querschnitt auf, der unmittelbar als Sitz für ein Wälzlager 4 dienen kann. Vorzugsweise ist das Wälzlager 4 mit einem Presssitz in das inneren Mantelrohr 2 eingesetzt und lagert das fahrerseitige Ende der oberen Lenkspindel 3 drehbar.

In der Figur 2 ist die Lenksäule aus Figur 1 in einem Längsschnitt von der Seite dargestellt.

Die Figur 2 zeigt den inneren Aufbau der Lenksäule, der ein zweites Wälzlager 24 zur Lagerung des lenkradabgewandten Endes der oberen Lenkspindel 3 umfasst. Das zweite Wälzlager 24 ist ebenso wie das erste Wälzlager 4 in das innere Mantelrohr 2 eingesetzt. Es ist weiter dargestellt, wie die untere Lenkspindel 11 in die obere Lenkspindel 3 eingreift. Die beiden Bauelemente weisen jeweils einen unrunden, beispielsweise kleeblattförmigen, und zueinander spielfrei passenden Querschnitt auf, so dass sie drehfest, aber axial verschieblich und teleskopierbar ineinander geführt sind. Aufgrund dieser Führung benötigt die untere Lenkspindel 11 nur ein Wälzlager zur drehbaren Lagerung. Das Wälzlager 25 ist mittels eines Passstücks 26 in das äußere Mantelrohr 1 an dessen freiem Ende, welches nicht von dem inneren Mantelrohr 2 durchsetzt ist, eingesetzt.

Figur 2 veranschaulicht auch die relative Position des inneren Mantelrohres 2 zu dem äußeren Mantelrohr 1. Die hier dargestellte Position entspricht einer Mittelstellung innerhalb des Verstellbereichs der Axialverstellung, der dem Fahrer zur Anpassung des Lenkradabstandes zur Verfügung steht. Dies ist erkennbar daran, dass eine Spannachse 27 des ansonsten hier nicht sichtbaren Spannapparates 8 mittig in dem Führungsschlitz 10 liegt. Weiter ist in der Position gemäß Figur 2 die Buchse 16 in der Ausnehmung an einem lenkradfernen Ende positioniert. Der Nutenstein ist in der T-Nut 18 unmittelbar anliegend an der Buchse 16 befestigt, so dass die Buchse 16 zwischen dem Ende der Ausnehmung 15 und dem Nutenstein 19 festgelegt ist.

Figur 2 zeigt also eine mittlere Einstellung der Lenksäule bei normalem Betriebszustand.

In der Figur 3, die im wesentlichen der Figur 2 entspricht, ist das innere Mantelrohr 2 gegenüber dem äußeren Mantelrohr 1 nach links in das äußere Mantelrohr 1 hinein verschoben, so dass die Spannachse 27 an dem lenkradnahen Ende des Führungsschlitzes 10 anliegt. Diese Position entspricht einer Axialverstellung durch den Fahrer, bei der das Lenkrad den im normalen Fahrbetrieb größtmöglichen Abstand vom Fahrer aufweist und somit voll eingeschoben ist.

Die Figur 4 zeigt die Lenksäule nach dem so genannten Crashfall, also nach einem Frontalaufprall des Fahrzeugs auf ein Hindernis, bei dem der Fahrer auf das Lenkrad prallt. Ausgehend von der Stellung gemäß Figur 3 ist die Baugruppe aus den Mantelrohren 1 und 2, der Konsole 6 und dem Tragelement 13 nach links verschoben, als in Fahrtrichtung des Fahrzeugs nach vorne. Die Konsole rutscht dabei im Bereich der Ausschnitte 7 aus ihren Befestigungen an der Karosserie. Der Betrag der Verschiebung entspricht der Länge der Ausnehmung 15, was daran erkennbar ist, dass die karosseriefeste Buchse 16 nun am lenkradnahen Ende der Ausnehmung 15 anliegt. Während des Aufpralls verschiebt sich also auch das Tragelement 13 unter dem Einfluss der entstehenden Kraft, welche zumindest mit einer Komponente in Richtung der Längsachse 5 wirkt, gegen die Buchse 16. Der Nutenstein 19 rutscht dabei entlang der T-Nut 18. Die mittels der Gewindeschraube 20 erzeugte Klemmkraft bewirkt dabei eine Reibung des Nutensteins 19 innerhalb der T-Nut 18, die zu einer Energieabsorption führt. Diese Energieabsorption ist gewünscht, da sie den Aufprall des Fahrers auf das Lenkrad dämpft und dadurch das Verletzungsrisiko bei einem Crash verringert.

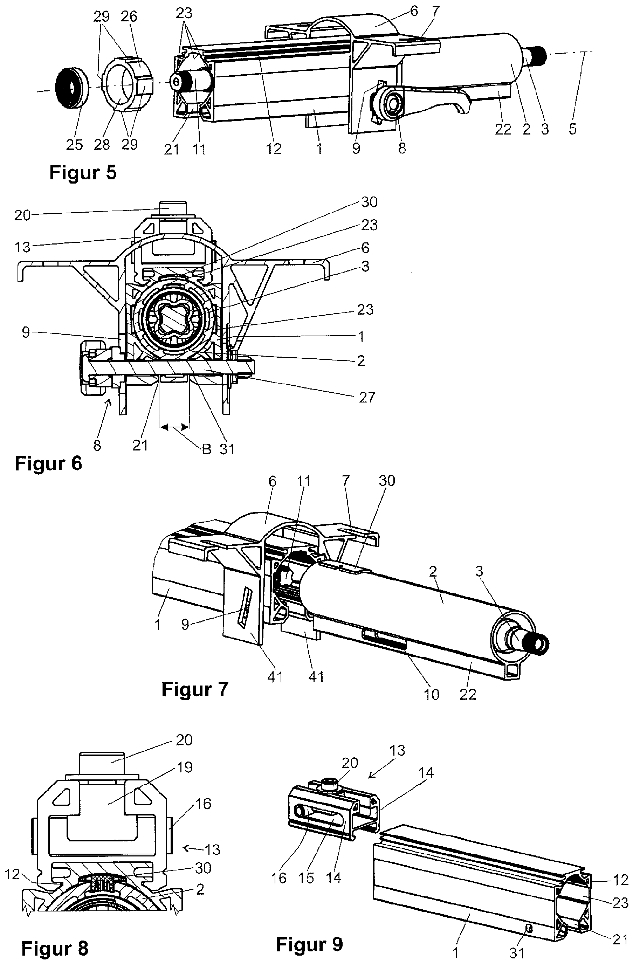

Figur 5 zeigt die Lenksäule in einer perspektivischen Ansicht auf die Lagerung der unteren Lenkspindel 11 in dem äußeren Mantelrohr 1, wobei die Lagerung hier in Explosionsdarstellung vorliegt. Das äußere Mantelrohr ist, wie bereits oben erwähnt, als Strangpressteil gefertigt und weist deshalb über seine Längserstreckung in Richtung der Längsachse 5 im wesentlichen gleichförmigen Querschnitt auf der über die gesamte Länge bzgl. der Längsachse 5 im Wesentlichen erhalten ist, ohne dass mittels Zerspanungsoperation größere Abschnitte von dem ursprünglichen Rohling zerspant wurden. Insbesondere ist der Innenraum von einer inneren Umfangsfläche begrenzt, die vier teilzylindrische Flächen und drei dazwischen liegende rechteckige Nuten 23 aufweist. Die teilzylindrischen Flächen bilden eine etwa kreiszylindrische, rohrförmige Führung, in die das innere Mantelrohr 2 eingesetzt ist. Die Nuten 23 und der unten angeordnete Längsschlitz 21 sind in 90° Winkelabstand verteilt und bilden eine kreuzförmige Erweiterung des im Übrigen runden Querschnitts.

In diese lichte Öffnung des äußeren Mantelrohres 1 wird das Passstück 26 eingesetzt, das eine kompatible äußere Umfangsfläche mit Ansätzen 29 aufweist, sowie einen kreiszylindrischen ringförmigen innen angeordneten Lagersitz 28. Der Lagersitz 28 dient zur Aufnahme des Wälzlagers 25. Der Innenring des Wälzlagers 25 wiederum nimmt den Lagersitz der unteren Lenkspindel 11 auf. Somit lagert das Wälzlager 25 die untere Lenkspindel 11 in dem Passstück 26, welche wiederum in dem äußeren Mantelrohr 1 fixiert ist. Aufgrund der Ausformung des äußeren Mantelrohres 1 und des Passstücks 26 als Strangpressteil kann die Positionierung des Passstücks 26 an nahezu beliebiger Stelle innerhalb des äußeren Mantelrohres 1 erfolgen. Die Lagerung ist deshalb für verschiedene Ausführungen, z.B. unterschiedlicher Länge mit Gleichteilen ausführbar.

Figur 6 zeigt einen Querschnitt durch die Spannachse 27 des Spannapparates 8. Der Spannapparat 8 umfasst weiterhin eine Keilscheiben-Nocken-Anordnung, um das äußere Mantelrohr 1, das innere Mantelrohr 2 und die Seitenwangen 41 der Konsole 6 miteinander zu verspannen. Der Spannapparat 8 befindet sich in dem abgebildeten Querschnitt in der Fixierstellung. In dieser Fixierstellung ist die Breite B des Längsschlitz 21 des äußeren Mantelrohr 1 gegenüber der nicht dargestellten Freigabestellung des Spannapparates 8 reduziert bzw. verschmälert. Durch die reduzierte Breite B des Längschlitzes ist der Durchmesser der Bohrung des äußeren Mantelrohr 1, welche zur Aufnahme des inneren Mantelrohres 2 dient, ebenfalls reduziert.

Dadurch wird das innere Mantelrohr 2 im äußeren Mantelrohr 2 geklemmt. Wird der Spannapparat 8 in die Freigabestellung überführt, so vergrößert sich die Breite B des Längsschlitzes 21 und somit Durchmesser der Bohrung des äußeren Mantelrohrs 1, wodurch die Klemmung des inneren Mantelrohrs aufgehoben wird, so dass eine Verschiebung des inneren Mantelrohrs gegenüber des äußeren Mantelrohr in Axialrichtung ermöglicht wird.

Die Figur 7 zeigt eine perspektivische Ansicht der Lenksäule, bei der das innere Mantelrohr 2 aus dem äußeren Mantelrohr 1 heraus gezogen ist. Das innere Mantelrohr 2 ist mit seinem unten angeformten Steg 22 so ausgebildet, dass es allein aufgrund der Form drehfest in das äußere Mantelrohr 1 passt. Weiter trägt das innere Mantelrohr 2 an seiner hinteren Oberseite eine Gleiteinlage 30. Der Steg weist den Führungsschlitz 10 auf, der von der hier nicht dargestellten Spannachse 27 des Spannapparats 8 durchsetzt ist. Der in der Konsole 6 ausgebildete Führungsschlitz 9 entspricht Bewegungsbahn der Spannachse 27 gegenüber der Konsole 6 bei einem Verstellvorgang in vertikaler Richtung der Lenksäule im Kraftfahrzeug.

In der Figur 8 ist in einem Querschnitt die Führung des inneren Mantelrohres 2 in dem äußeren Mantelrohr 1 gezeigt. Zugleich zeigt Figur 8 das Tragelement 13 in einer Stirnansicht. Das innere Mantelrohr 2 trägt an seiner Oberseite als Verdrehsicherung die Gleiteinlage 30, die in die obere Nut 23 des äußeren Mantelrohres 1 eingreift. Die Gleiteinlage 30 kann auch einem selbstschmierenden Kunststoff hergestellt sein. Das Tragelement 13 mit dem darin reibschlüssig angeordneten Nutenstein 19 und der Buchse 16 wurde bereits oben beschrieben.

Figur 9 zeigt das äußere Mantelrohr 1 mit dem Tragelement 13 in getrennter Darstellung vor dem Aufsetzen des Tragelements 13 auf das Mantelrohr 1. In dieser Darstellung ist die Lage einer Bohrung 31 veranschaulicht, die die hier nicht dargestellte Spannachse 27 aufnimmt.

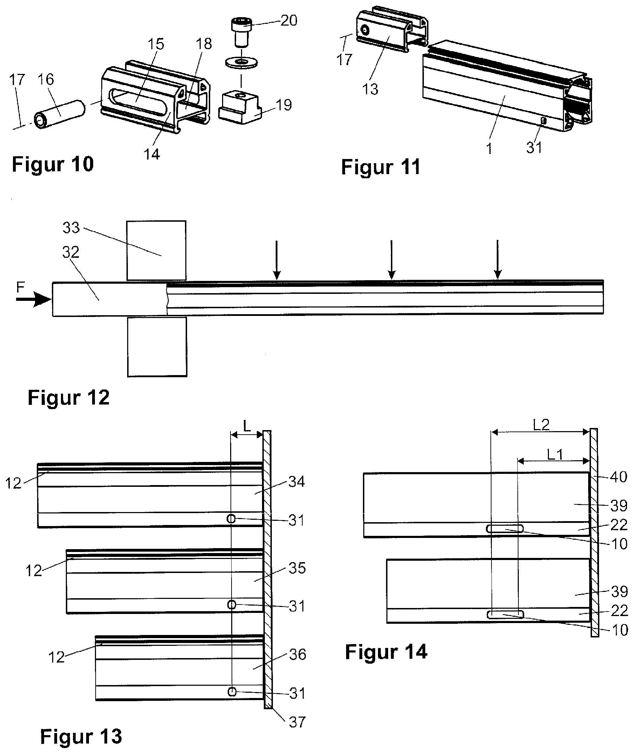

Figur 10 zeigt das Tragelement 13 mit dem Nutenstein 19 und der Buchse 16 in einer Explosionsdarstellung.

Figur 11 zeigt das äußere Mantelrohr 1 mit dem Tragelement 13 ohne Nutenstein und Buchse in einer Darstellung wie in Figur 9.

Figur 12 veranschaulicht dein Herstellungsverfahren des äußeren Mantelrohres 1. Von der linken Seite der Figur her wird unter einer Presskraft F, bevorzugt bei erhöhter Temperatur, ein Materialstrang 32, zum Beispiel aus einer Aluminiumlegierung oder Magnesiumlegierung, durch eine Form 33 gepresst. Das entstehende Formteil ist dann ein Rohling mit der Querschnittsform des äußeren Mantelrohres 1 einschließlich des Längsschlitzes 21. Zur Trennung in einzelne Werkstücke wird das Formteil an den mit Pfeilen gekennzeichneten Stellen getrennt, beispielsweise durch Sägen. Die Länge der Werkstücke kann durch Wahl der Trennstellen variiert werden.

Figur 13 zeigt, wie ein langer Rohling 34, ein mittellanger Rohling 35 und ein kurzer Rohling 36 durch Anbringen von Funktionselementen bearbeitet werden. Die Funktionselemente beschränken sich in diesem Fall auf die Bohrung 31 zur Aufnahme der Spannachse 27. Diese Bohrung wird bei den drei Rohlingen 34, 35 und 36 in dem gleichen Abstand L von der rechten Stirnfläche des jeweiligen Rohlings, hier veranschaulicht durch eine Anlageplatte 37, angebracht. Alle anderen Merkmale des äußeren Mantelrohres 1 sind, wie bereits oben beschrieben wurde, allein durch die Strangpressform erzeugt worden. Die gilt beispielsweise für die Nuten 12 und die anderen, in der Figur 13 nicht sichtbaren Merkmale des inneren Querschnitts. Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

Figur 14 zeigt, wie ein langer Rohling 38 und ein kurzer Rohling 39 durch Anbringen von Funktionselementen jeweils zu einem inneren Mantelrohr 2 bearbeitet werden. Die Funktionselemente beschränken sich in diesem Fall auf den Führungsschlitz 10, der in den Steg 22 eingebracht wird. Dieser Führungsschlitz 10 wird bei den beiden Rohlingen 38 und 39 in dem gleichen Bereich von L1 bis L2 gemessen von der rechten Stirnfläche des jeweiligen Rohlings angebracht, hier veranschaulicht durch eine Anlageplatte 40. Alle anderen Merkmale des inneren Mantelrohres 2 sind, wie sie bereits oben beschrieben wurden, allein durch die Strangpressform erzeugt worden. Dies gilt beispielsweise für den Steg 22 und die anderen, in der Figur 14 nicht sichtbaren Merkmale des inneren Querschnitts.

Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

So können in einheitlicher Aufspannung aus demselben Strangpressteil Komponenten für Lenksäulen verschiedener Längen und damit für verschiedene Fahrzeugplattformen in besonders einfacher und kostengünstiger Weise gefertigt werden.

### Bezugszeichenliste

- 1.: äußeres Mantelrohr
- 2.: inneres Mantelrohr
- 3.: Lenkspindel
- 4.: Wälzlager
- 5.: Längsachse
- 6.: Konsole
- 7.: Ausschnitte
- 8.: Spannapparat
- 9.: Führungsschlitze
- 10.: Führungsschlitz
- 11.: Lenkspindel
- 12.: Nuten
- 13.: Tragelement
- 14.: Seitenwände
- 15.: Ausnehmung
- 16.: rohrförmige Buchse
- 17.: Schwenkachse
- 18.: T-Nut
- 19.: Nutenstein
- 20.: Gewindeschraube
- 21.: Längsschlitz
- 22.: Steg
- 23.: Nut
- 24.: Wälzlager
- 25.: Wälzlager
- 26.: Passstück
- 27.: Spannachse
- 28.: Lagersitz
- 29.: Ansatz
- 30.: Gleiteinlage
- 31.: Bohrung
- 32.: Materialstrang
- 33.: Form
- 34.: Rohling
- 35.: Rohling
- 36.: Rohling
- 37.: Anlageplatte
- 38.: Rohling
- 39.: Rohling
- 40.: Anlageplatte
- 41.: Seitenwange
- B: Breite des Längsschlitzes

## Patentansprüche

1. Verfahren zur Herstellung einer Lenksäule für ein Kraftfahrzeug, wobei die Lenksäule ein inneres Mantelrohr (2), zur drehbaren Aufnahme einer Lenkwelle (3, 11) um ihre Längsachse, und ein äußeres Mantelrohr (1), das das innere Mantelrohr (2) aufnimmt, umfasst, wobei das äußere Mantelrohr (1) einen sich in Richtung der Längsachse erstreckenden Längsschlitz (21) aufweist, wobei ein Spannapparat (8), der zwischen einer Freigabestellung, in der das innere Mantelrohr (2) gegenüber dem äußeren Mantelrohr (2) verstellbar ist, und einer Fixierstellung, in der das innere Mantelrohr (2) gegenüber dem äußeren Mantelrohr (2) fixiert ist, umschaltbar ist, wobei der Spannapparat (8) eine Spannachse (27) umfasst, die durch eine Ausnehmung im äußeren Mantelrohr (1) quer zur Längsachse geführt ist und wobei der Längsschlitz (21) in der Freigabestellung eine größere Breite aufweist als in der Fixierstellung, **dadurch gekennzeichnet, dass** das Verfahren folgende Verfahrensschritte aufweist:
a) Anfertigen eines einzelnen Rohlings des äußeren Mantelrohres (1), welcher den in Längsrichtung durchgehenden Längsschlitz (21) aufweist, in einem Strangpressverfahren,
b) Ablängen des einzelnen Rohlings auf eine erforderliche Bauteillänge,
c) Erzeugen von einer vordefinierten Anzahl von Ausnehmungen in einem vordefinierten Abstand (L, L1, L2) von einer Stirnseite des Rohlings, mittels einer Zerspanungsoperation zur Ausbildung von Funktionselementen (31) im äußeren Mantelrohr (1),
g) Komplettieren der Lenksäule durch Anbringen von weiteren Bauelementen.

2. Verfahren zur Herstellung einer Lenksäule nach Anspruch 1, **dadurch gekennzeichnet, dass** das äußere Mantelrohr (1) die Lenkwelle (3) einteilig um mehr als 270° umschließt.

3. Verfahren zur Herstellung einer Lenksäule nach einem der vorhergehenden Ansprüche, **dadurch gekennzeichnet, dass** in den Strangpressrohling zur Ausbildung des äußeren Mantelrohrs (1) ausschließlich Ausnehmungen, bevorzugt in Form von Öffnungen, und eventuell zusätzlich Planflächen mittels Zerspanung eingebracht werden.

4. Verfahren zur Herstellung einer Lenksäule nach einem der vorhergehenden Ansprüche **gekennzeichnet durch** folgende weitere Verfahrensschritte vor dem Verfahrensschritt g):
d) Anfertigen eines einzelnen Rohlings des inneren Mantelrohres (2), welcher den in Längsrichtung durchgehenden Längsschlitz (21) aufweist, in einem Strangpressverfahren,
e) Ablängen des einzelnen Rohlings auf eine erforderliche Bauteillänge,
f) Erzeugen von einer vordefinierten Anzahl von Ausnehmungen in einem vordefinierten Abstand (L, L1, L2) von einer Stirnseite des Rohlings, mittels einer Zerspanungsoperation zur Ausbildung von Funktionselementen (10) im inneren Mantelrohr (2).

5. Verfahren zur Herstellung einer Lenksäule nach einem der vorhergehenden Ansprüche, **dadurch gekennzeichnet, dass** in jedem Längenbereich des äußeren und/oder inneren Mantelrohrs (1, 2) die Querschnittsfläche des Rohlings zur Ausbildung des äußeren und/oder Mantelrohrs (1, 2) mittels der Zerspanungsoperation maximal um 30% reduziert wird.

6. Verfahren nach einem der vorhergehenden Ansprüche, **dadurch gekennzeichnet, dass** das Komplettieren den Einbau einer Lenkwelle (3, 11) umfasst.

7. Verfahren nach einem der vorhergehenden Ansprüche, **dadurch gekennzeichnet, dass** das Komplettieren den Anbau einer Konsole (6) umfasst.

8. Verfahren nach einem der vorhergehenden Ansprüche, **dadurch gekennzeichnet, dass** das Komplettieren der Lenksäule die Montage des Spannapparates (8) umfasst, wobei die Spannachse (27), die Funktionselemente (10, 31) im inneren und/oder im äußeren Mantelrohr (1, 2) durchsetzt.

9. Verfahren nach einem der vorhergehenden Ansprüche, **dadurch gekennzeichnet, dass** ein Tragelement (13) auf das äußere Mantelrohr (1) aufgesetzt wird.

10. Verfahren nach Anspruch 6, **dadurch gekennzeichnet, dass** das Tragelement (13) mit einer Buchse (16) versehen wird.

11. Verfahren nach einem der vorhergehenden Ansprüche, **dadurch gekennzeichnet, dass** die Lenkwelle (3, 11) teleskopierbar ist und mittels Wälzlagern im inneren und/oder äußeren Mantelrohr drehbar gelagert ist.

12. Verstellbare Lenksäule hergestellt nach einem Verfahren mit den Merkmalen wenigstens eines der vorhergehenden Ansprüche.

13. Lenksäule für ein Kraftfahrzeug, wobei die Lenksäule ein inneres Mantelrohr (2), zur drehbaren Aufnahme einer Lenkwelle (3, 11) um ihre Längsachse, und ein äußeres Mantelrohr (1), das das innere Mantelrohr (2) aufnimmt, umfasst, wobei das äußere Mantelrohr (1) einen sich in Richtung der Längsachse erstreckenden Längsschlitz (21) aufweist, wobei ein Spannapparat (8), der zwischen einer Freigabestellung, in der das innere Mantelrohr (2) gegenüber dem äußeren Mantelrohr (2) verstellbar ist, und einer Fixierstellung, in der das innere Mantelrohr (2) gegenüber dem äußeren Mantelrohr (2) fixiert ist, umschaltbar ist, wobei der Spannapparat (8) einen Spannbolzen umfasst, der durch eine Ausnehmung im äußeren Mantelrohr quer zur Längsachse geführt ist und wobei der Längsschlitz (21) in der Freigabestellung eine größere Breite aufweist als in der Fixierstellung,
**dadurch gekennzeichnet,**
**dass** das äußere Mantelrohr (1) in einem Strangpressverfahren hergestellt ist, das auf eine erforderliche Bauteillänge abgelängt wurde, und eine vordefinierte Anzahl von Ausnehmungen aufweist, die in einem vordefinierten Abstand (L, L1, L2) von einer Stirnseite des Rohlings, welcher den in Längsrichtung durchgehenden Längsschlitz (21) aufweist, angeordnet sind, wobei das äußere Mantelrohr (1) das innere Mantelrohr (2) einstückig um mindestens 270° umschließt.

## Claims

1. Method for producing a steering column for a motor vehicle, the steering column comprising an inner steering column tube (2), for receiving a steering shaft (3, 11) such that it can be rotated about its longitudinal axis, and an outer steering column tube (1) which receives the inner steering column tube (2), the outer steering column tube (1) having a longitudinal slot (21) which extends in the direction of the longitudinal axis, a clamping apparatus (8) which can be switched over between a release position, in which the inner steering column tube (2) can be adjusted with respect to the outer steering column tube (2), and a fixing position, in which the inner steering column tube (2) is fixed with respect to the outer steering column tube (2), the clamping apparatus (8) comprising a clamping axle (27) which is guided through a recess in the outer steering column tube (1) transversely with respect to the longitudinal axis, and the longitudinal slot (21) having a greater width in the release position than in the fixing position,
**characterized in that** the method has the following method steps:
a) manufacturing of a single blank of the outer steering column tube (1), which blank has the continuous longitudinal slot (21) in the longitudinal direction, using an extrusion process,
b) cutting of the individual blank to a required component length,
c) producing of a predefined number of recesses at a predefined spacing (L, L1, L2) from an end side of the blank, by means of a metal cutting operation for configuring functional elements (31) in the outer steering column tube (1),
g) completing of the steering column by way of attaching of further components.

2. Method for producing a steering column according to Claim 1, **characterized in that** the outer steering column tube (1) encloses the steering shaft (3) in one piece by more than 270°.

3. Method for producing a steering column according to either of the preceding claims, **characterized in that** exclusively recesses, preferably in the form of openings, and possibly additional planar faces are introduced by means of material cutting into the extruded blank in order to configure the outer steering column tube (1).

4. Method for producing a steering column according to one of the preceding claims, **characterized by** the following further method steps before method step g) :
d) manufacturing of a single blank of the inner steering column tube (2), which blank has the continuous longitudinal slot (21) in the longitudinal direction, using an extrusion process,
e) cutting of the individual blank to a required component length,
f) producing of a predefined number of recesses at a predefined spacing (L, L1, L2) from an end side of the blank, by means of a metal cutting operation for configuring functional elements (10) in the inner steering column tube (2).

5. Method for producing a steering column according to one of the preceding claims, **characterized in that**, in every length region of the outer and/or inner steering column tube (1, 2), the cross-sectional area of the blank is reduced by at most 30% by means of the metal cutting operation for configuring the outer and/or steering column tube (1, 2).

6. Method according to one of the preceding claims, **characterized in that** the completing comprises the installation of a steering shaft (3, 11).

7. Method according to one of the preceding claims, **characterized in that** the completing comprises the attachment of a bracket (6).

8. Method according to one of the preceding claims, **characterized in that** the completing of the steering column comprises the mounting of the clamping apparatus (8), the clamping axle (27) penetrating the functional elements (10, 31) in the inner and/or in the outer steering column tube (1, 2) .

9. Method according to one of the preceding claims, **characterized in that** a carrying element (13) is placed onto the outer steering column tube (1).

10. Method according to Claim 6, **characterized in that** the carrying element (13) is provided with a bush (16) .

11. Method according to one of the preceding claims, **characterized in that** the steering shaft (3, 11) can be telescoped and is mounted rotatably in the inner and/or outer steering column tube by means of anti-friction bearings.

12. Adjustable steering column produced in accordance with a method having the features of at least one of the preceding claims.

13. Steering column for a motor vehicle, the steering column comprising an inner steering column tube (2), for receiving a steering shaft (3, 11) such that it can be rotated about its longitudinal axis, and an outer steering column tube (1) which receives the inner steering column tube (2), the outer steering column tube (1) having a longitudinal slot (21) which extends in the direction of the longitudinal axis, a clamping apparatus (8) which can be switched over between a release position, in which the inner steering column tube (2) can be adjusted with respect to the outer steering column tube (2), and a fixing position, in which the inner steering column tube (2) is fixed with respect to the outer steering column tube (2), the clamping apparatus (8) comprising a clamping pin which is guided through a recess in the outer steering column tube transversely with respect to the longitudinal axis, and the longitudinal slot (21) having a greater width in the release position than in the fixing position,
**characterized**
**in that** the outer steering column tube (1) is produced using an extrusion process, which outer steering column tube (1) has been cut to a required component length, and has a predefined number of recesses which are arranged at a predefined spacing (L, L1, L2) from an end side of the blank which has the continuous longitudinal slot (21) in the longitudinal direction, the outer steering column tube (1) enclosing the inner steering column tube (2) in one piece by at least 270°.

## Revendications

1. Procédé de fabrication d'une colonne de direction pour un véhicule automobile, dans lequel la colonne de direction comprend un tube d'enveloppe intérieur (2), pour le logement rotatif d'un arbre de direction (3, 11) autour de son axe longitudinal, et un tube d'enveloppe extérieur (1), qui contient le tube d'enveloppe intérieur (2), dans lequel le tube d'enveloppe extérieur (1) présente une fente longitudinale (21) s'étendant dans la direction de l'axe longitudinal, dans lequel un appareil de serrage (8), qui peut être commuté entre une position de libération, dans laquelle le tube d'enveloppe intérieur (2) est déplaçable par rapport au tube d'enveloppe extérieur (2), et une position de fixation, dans laquelle le tube d'enveloppe intérieur (2) est fixé par rapport au tube d'enveloppe extérieur (2), dans lequel l'appareil de serrage (8) comprend un axe de serrage (27), qui est guidé à travers un évidement dans le tube d'enveloppe extérieur (1) transversalement à l'axe longitudinal et dans lequel la fente longitudinale (21) présente dans la position de libération une plus grande largeur que dans la position de fixation, **caractérisé en ce que** le procédé présente les étapes de procédé suivantes:
a) préparer une ébauche individuelle du tube d'enveloppe extérieur (1), qui présente la fente longitudinale (21) continue en direction longitudinale, par un procédé d'extrusion,
b) couper à longueur l'ébauche individuelle à une longueur de pièce nécessaire,
c) produire un nombre prédéfini d'évidements dans une distance prédéfinie (L, L1, L2) d'un côté frontal de l'ébauche, au moyen d'une opération d'enlèvement de copeaux pour former des éléments fonctionnels (31) dans le tube d'enveloppe extérieur (1),
g) compléter la colonne de direction par la pose d'autres éléments de construction.

2. Procédé de fabrication d'une colonne de direction selon la revendication 1, **caractérisé en ce que** le tube d'enveloppe extérieur (1) entoure l'arbre de direction (3) en une seule pièce sur plus de 270°.

3. Procédé de fabrication d'une colonne de direction selon l'une quelconque des revendications précédentes, **caractérisé en ce que** l'on pratique dans l'ébauche extrudée destinée à la formation du tube d'enveloppe extérieur (1) des évidements, de préférence sous la forme d'ouvertures, et éventuellement en outre des faces planes, exclusivement par enlèvement de copeaux.

4. Procédé de fabrication d'une colonne de direction selon l'une quelconque des revendications précédentes, **caractérisé par** les autres étapes de procédé suivantes avant l'étape de procédé g):
d) préparer une ébauche individuelle du tube d'enveloppe intérieur (2), qui présente la fente longitudinale (21) continue en direction longitudinale, par un procédé d'extrusion,
e) couper à longueur l'ébauche individuelle à une longueur de pièce nécessaire,
f) produire un nombre prédéfini d'évidements dans une distance prédéfinie (L, L1, L2) d'un côté frontal de l'ébauche, au moyen d'une opération d'enlèvement de copeaux pour former des éléments fonctionnels (10) dans le tube d'enveloppe intérieur (2).

5. Procédé de fabrication d'une colonne de direction selon l'une quelconque des revendications précédentes, **caractérisé en ce que** dans chaque région de longueur du tube d'enveloppe extérieur et/ou intérieur (1, 2) on réduit l'aire de la section transversale de l'ébauche destinée à la formation du tube d'enveloppe extérieur et/ou intérieur (1, 2) au maximum de 30 % au moyen de l'opération d'enlèvement de copeaux.

6. Procédé selon l'une quelconque des revendications précédentes, **caractérisé en ce que** le fait de compléter comprend la pose d'un arbre de direction (3, 11).

7. Procédé selon l'une quelconque des revendications précédentes, **caractérisé en ce que** le fait de compléter comprend le placement d'une console (6).

8. Procédé selon l'une quelconque des revendications précédentes, **caractérisé en ce que** le fait de compléter la colonne de direction comprend le montage de l'appareil de serrage (8), dans lequel l'axe de serrage (27) traverse les éléments fonctionnels (10, 31) dans le tube d'enveloppe intérieur et/ou extérieur (1, 2).

9. Procédé selon l'une quelconque des revendications précédentes, **caractérisé en ce que** l'on pose un élément de support (13) sur le tube d'enveloppe extérieur (1).

10. Procédé selon la revendication 6, **caractérisé en ce que** l'élément de support (13) est muni d'un coussinet (16) .

11. Procédé selon l'une quelconque des revendications précédentes, **caractérisé en ce que** l'arbre de direction (3, 11) est télescopique et est monté de façon rotative au moyen de paliers de roulement dans le tube d'enveloppe intérieur et/ou extérieur.

12. Colonne de direction réglable fabriquée par un procédé présentant les caractéristiques d'au moins une des revendications précédentes.

13. Colonne de direction pour un véhicule automobile, dans lequel la colonne de direction comprend un tube d'enveloppe intérieur (2), pour le logement rotatif d'un arbre de direction (3, 11) autour de son axe longitudinal, et un tube d'enveloppe extérieur (1), qui contient le tube d'enveloppe intérieur (2), dans lequel le tube d'enveloppe extérieur (1) présente une fente longitudinale (21) s'étendant dans la direction de l'axe longitudinal, dans lequel un appareil de serrage (8), qui peut être commuté entre une position de libération, dans laquelle le tube d'enveloppe intérieur (2) est déplaçable par rapport au tube d'enveloppe extérieur (2), et une position de fixation, dans laquelle le tube d'enveloppe intérieur (2) est fixé par rapport au tube d'enveloppe extérieur (2), dans lequel l'appareil de serrage (8) comprend un boulon de serrage, qui est guidé à travers un évidement dans le tube d'enveloppe extérieur transversalement à l'axe longitudinal et dans lequel la fente longitudinale (21) présente dans la position de libération une plus grande largeur que dans la position de fixation,
**caractérisé en ce que** le tube d'enveloppe extérieur (1) est fabriqué par un procédé d'extrusion, il a été coupé à longueur à une longueur de pièce nécessaire, et il présente un nombre prédéfini d'évidements, qui sont disposés à une distance prédéfinie (L, L1, L2) d'un côté frontal de l'ébauche, qui présente la fente longitudinale (21) continue en direction longitudinale, dans laquelle le tube d'enveloppe extérieur (1) entoure le tube d'enveloppe intérieur (2) d'une seule pièce sur au moins 270°.
